# EUROPEAN PATENT SPECIFICATION

(11) **EP 2 505 439 B1**
(45) Date of publication and mention of the grant of the patent: **20.11.2013**
(21) Application number: 11160571.3
(22) Date of filing: 31.03.2011
(51) Int. Cl.: B60R 25/04, F02D 41/00

(54) **Key switch dependent safety shutdown mechanism with accurate time delay**
Schlüsselschalterabhängiger Sicherheitsabschaltmechanismus mit präziser Zeitverzögerung
Mécanisme d'arrêt de sécurité dépendant de commutateur à clé doté d'une temporisation précise

(43) Date of publication of application: 03.10.2012
(73) Proprietor: Delphi Technologies, Inc., Troy, MI 48007 (US)
(72) Inventor: Feiereisen, Jean-Marc, 1423, Howald (LU); Engel, Joseph, 4671, Differdange (LU); Herbin, François, 54400, Cosnes et Romain (FR)
(74) Representative: Robert, Vincent

(56) References cited:
- GB-A- 2 375 143
- US-A- 5 928 296

## Description

### TECHNICAL FIELD

The present invention relates to a key switch dependent shutdown mechanism with time delay. More particularly, the invention relates to a safety feature which guarantees by electronics hardware that the Engine Control Unit (ECU) shuts down the injectors and the high pressure valve control a defined time after the key switch has been removed.

### BACKGROUND OF THE INVENTION

It is already known ECUs that contain an electronic circuit which satisfies this general safety feature. However, for the next generation of ECUs, it is requested more stringent safety requirements especially in terms of error margin for being timely activated. As the tolerances have become much tighter, the existing circuits no longer fulfil the needs

As an example existing circuits were designed to shut down the injectors after a time of one second ±50%. It is now required that the control circuit shuts down the injectors after a time of two seconds ±20%. The longer time given is needed in order to perform tests to ensure correct operation.

Within the scope of the present invention, it has been shown that the two factors that introduce the biggest error on the delay in the existing circuits are the tolerances of the capacitor (C_delay) as well as the temperature dependency of the transistors.

Otherwise, although the required electronic function may be implemented by designing an ASIC (Application Specific Integrated Circuit), such a solution is neither cost wise nor flexible while resulting in a substantive implementation task. Furthermore, the safe shutdown path shall be ensured without any software interaction.

### SUMMARY OF THE INVENTION

One goal of the present invention is to overcome the aforecited drawbacks by providing a control circuit fulfilling the time tolerance requirements while keeping reasonable costs and being in line with current safety standards requiring safety mechanisms to be simple and understandable.

For that purpose, according to a first aspect, the invention concerns a control circuit with delayed safety shutdown of an electronic device comprising a key switch input for detecting a key removal, a capacitor for storing a charge during a predefined time delay and an output control signal enabling to shut down said electronic device after said predefined time delay has elapsed, characterized in that it further comprises a delay circuit made of discrete components comprising a temperature compensated current source adapted for charging the delay capacitor a temperature compensated voltage source defining a trigger point at which the delay circuit toggles once the stored charge corresponds to the predefined time delay; and a temperature compensated switch adapted for toggling the delay capacitor from a charge state into a discharge state and releasing the output control signal. With such key control circuit, the required electronic function is implemented by using discrete components so as to keep the costs at a reasonable level and to reduce the implementation time while increasing flexibility. Further, use of temperature compensated delay circuit leaves the delay capacitor as being the only significant factor which influences the tolerances of the circuit.

As a delay of about 2 seconds is quite long to achieve with standard passive components, previous circuits have the disadvantage that, for achieving this time delay, a large capacitor had to be used. This large capacitor drove the need to use technologies bearing disadvantages like decreased reliability or increased cost (e.g. tantalum). According to an advantageous embodiment, a single ceramic capacitor fulfils the needs. This reduces the cost of the circuit and ensures availability of parts. According to a preferred variant, a ceramic capacitor with less tolerance and less temperature dependence can be used to improve precision.

According to another advantageous embodiment, the circuit is only dependent on one supply voltage. This guarantees that the circuit remains independent from other functions by design so that the injection is OFF when the output control signal is enabled.

According to another advantageous embodiment, the circuit is independent of any software interaction. This prevents the circuit from unwanted delay.

According to another advantageous embodiment, it further comprises two reference voltage points for both the temperature compensated current and voltage sources. Preferably, the reference voltage points are arranged to guarantee that the maximum voltage at the temperature compensated current source is always higher than the output voltage of the temperature compensated voltage source. Use of interrelated reference voltage points ensures better operation of the delay circuit.

According to another advantageous embodiment, it further comprises an auxiliary circuitry adapted for discharging the delay capacitor if the voltage on the key switch input is above a given threshold.

According to another advantageous embodiment, said output control signal is an active low signal adapted to shut down an injector device. Preferably, it is further provided with an auxiliary signal which controls the injector device by directly toggling the output signal.

According to another advantageous embodiment, said active low signal is further adapted to shut down a high pressure valve.

### BRIEF DESCRIPTION OF THE DRAWINGS

Other features and advantages of the invention will appear upon reading the following description which refers to the annexed drawing in which:

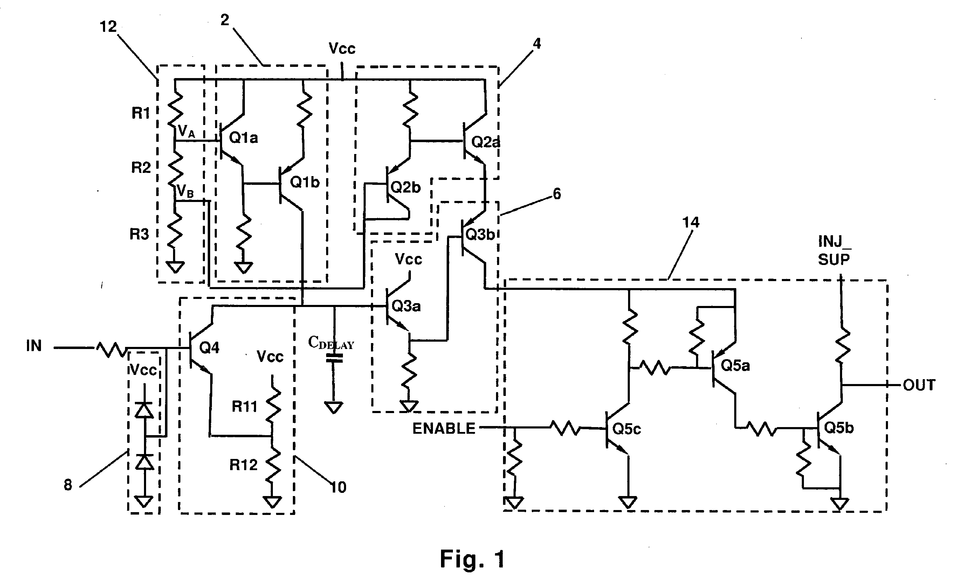

- Figure 1 represents a key control circuit according to a preferred embodiment of the present invention.

### DETAILED DESCRIPTION OF THE INVENTION

With reference now to Figure 1, we will describe in more details the key control circuit according to a preferred embodiment. The key control circuit has for main goal to shut down within a predetermined delay some devices such as an injector or a high pressure valve in automotive vehicle.

It comprises an ignition input (IN) which is de-asserted upon key removal or withdrawal. At the output (OUT), an output control signal in the form of an active low signal that enables to shut down the required devices (e.g. injector) after a predetermined time has elapsed to fulfil the safety target. In between, it is provided with a delay capacitor (C_{DELAY}) for storing a charge in order to control the time delay of the shut down instruction from the input to the output. For that purpose, the delay capacitor is sized in function of the delay requirement.

In order to reduce or even annihilate the influence of temperature on the state of charge and discharge of the delay capacitor, it is provided with a temperature compensated delay circuit. This delay circuit comprises a temperature compensated current source 2 adapted for charging the delay capacitor, a temperature compensated voltage source 4 defining a trigger point at which the delay circuit toggles once the stored charge corresponds to the predefined time delay, i.e. when the capacitor is charged at a given threshold, and a temperature compensated switch 6 adapted for toggling the delay capacitor from a charge state into a discharge state.

Getting into more details, the circuit preferably further comprises an ESD unit 8 to prevent the circuit from electrostatic discharges when removing or entering the key. The input IN is then connected to the delay capacitor C_{DELAY}.

According to a variant, an auxiliary circuit 10, comprising transistor Q4, is connected between the key switch input and the delay capacitor for discharging it if the voltage on the key switch input IN is above a given threshold defined by R11 and R12.

The temperature compensated current source which charges the delay capacitor C_{DELAY}, comprises a double transistor Q1a and Q1b. The temperature compensated voltage source which defines the trigger point at which the circuit toggles, also comprises a double transistor Q2a and Q2b. Furthermore, the temperature compensated switch 6 which toggles the circuit once the charge stored by the delay capacitor is above a given threshold, also comprises a double transistor Q3a and Q3b.

A reference circuit 12 is providing two reference voltage points V_{A} and V_{B} for the current and voltage sources. These reference voltage points V_{A} and V_{B} are created with resistors R1, R2 and R3. As the voltage and current sources share the same references, it can be guaranteed that the maximum voltage at the current source is always higher than the output voltage of the voltage source.

Moreover, according to a variant, it is provided an auxiliary signal ENABLE which permits injection by directly toggling the output OUT. In this case, it is further provided with a logical AND circuit 14 between the delay circuit and the ENABLE signal to create the output signal. This logical circuit comprises transistors Q5a, Q5b and Q5c and is supplied by an independent supply voltage INJ_SUP.

Having described the invention with regard to certain specific embodiments, it is to be understood that these embodiments are not meant as limitations of the invention. Indeed, various modifications, adaptations and/or combination between embodiments may become apparent to those skilled in the art without departing from the scope of the annexed claims.

## Claims

1. A key control circuit with delayed safety shutdown of an electronic device comprising
- a key switch input (IN) for detecting a key removal;
- a delay capacitor (C_{DELAY}) for creating a time delay with the stored charge;
- an output control signal (OUT) enabling to shut down said electronic device after said predefined time delay has elapsed;
**characterized in that** it further comprises a delay circuit made of discrete components comprising:
- a temperature compensated current source (2) adapted for charging the delay capacitor;
- a temperature compensated voltage source (4) defining a trigger point at which the delay circuit toggles once the stored charge corresponds to the predefined time delay; and
- a temperature compensated switch (6) adapted for toggling the delay capacitor from a charge state into a discharge state and releasing the output control signal.

2. A key control circuit according to claim 1, wherein said delay capacitor (C_{DELAY}) is a ceramic capacitor.

3. A key control circuit according to claim 1 or 2, wherein it is only dependent from one supply voltage.

4. A key control circuit according to any of claims 1 to 3, wherein it is independent of any software interaction.

5. A key control circuit according to any of claims 1 to 4, wherein it further comprises two reference voltage points (V_{A}, V_{B}) for both the temperature compensated current and voltage sources (2, 4).

6. A key control circuit according to claim 5, wherein the reference voltage points (V_{A}, V_{B}) are arranged to guarantee that the maximum voltage at the temperature compensated current source (2) is always higher than the output voltage of the temperature compensated voltage source (4).

7. A key control circuit according to any of claims 1 to 6, wherein it further comprises an auxiliary circuit (10) adapted for discharging the delay capacitor (C_{DELAY}) if the voltage on the key switch input (IN) is above a given threshold.

8. A key control circuit according to any of claims 1 to 7, wherein said output control signal (OUT) is an active low signal adapted to shut down an injector device.

9. A key control circuit according to claim 8, wherein it is further provided with an auxiliary signal (ENABLE) which controls the injector device by directly toggling the output signal (OUT).

10. A key control circuit according to claim 8 or 9, wherein said active low signal is further adapted to shut down a high pressure valve.

## Patentansprüche

1. Eine Schlüsselsteuerungsschaltung mit verzögerter Sicherheitsabschaltung einer elektronischen Vorrichtung, die aufweist
- einen Schlüsselschaltereingang (IN) zum Erfassen eines Entfernens eines Schlüssels;
- einen Verzögerungskondensator (CDELAY) zum Erzeugen einer Zeitverzögerung mit der gespeicherten Ladung;
- ein Ausgangssteuerungssignal (OUT), das ein Abschalten der elektronischen Vorrichtung ermöglicht, nachdem die vordefinierte Zeitverzögerung vergangen ist;
**dadurch gekennzeichnet, dass** sie weiter eine Verzögerungsschaltung aus diskreten Komponenten aufweist, die aufweisen:
- eine Temperatur-kompensierte Stromquelle (2), die ausgebildet ist zum Laden des Verzögerungskondensators;
- eine Temperatur-kompensierte Spannungsquelle (4), die einen Auslösepunkt definiert, an dem die Verzögerungsschaltung umschaltet, sobald die gespeicherte Ladung der vordefinierten Zeitverzögerung entspricht; und
- einen Temperatur-kompensierten Schalter (6), der ausgebildet ist zum Umschalten des Verzögerungskondensators von einem Ladezustand in einen Entladezustand und Freigeben des Ausgangssteuerungssignals.

2. Eine Schlüsselsteuerungsschaltung gemäß Anspruch 1, wobei der Verzögerungskondensator (C_{DELAY}) ein Keramik-Kondensator ist.

3. Eine Schlüsselsteuerungsschaltung gemäß Anspruch 1 oder 2, wobei diese nur von einer Versorgungsspannung abhängig ist.

4. Eine Schlüsselsteuerungsschaltung gemäß einem der Ansprüche 1 bis 3, wobei diese unabhängig von einer Software-Interaktion ist.

5. Eine Schlüsselsteuerungsschaltung gemäß einem der Ansprüche 1 bis 4, die weiter zwei Referenzspannungspunkte (V_{A}, V_{B}) für sowohl die Temperatur-kompensierten Strom- als auch Spannungsquellen (2, 4) aufweist.

6. Eine Schlüsselsteuerungsschaltung gemäß Anspruch 5, wobei die Referenzspannungspunkte (V_{A}, V_{B}) ausgebildet sind, zu garantieren, dass die maximale Spannung an der Temperatur-kompensierten Stromquelle (2) stets höher ist als die Ausgangsspannung der Temperatur-kompensierten Spannungsquelle (4).

7. Eine Schlüsselsteuerungsschaltung gemäß einem der Ansprüche 1 bis 6, die weiter eine Hilfsschaltung (10) aufweist, die ausgebildet ist zum Entladen des Verzögerungskondensators (C_{DELAY}), wenn die Spannung an dem Schlüsselschaltereingang (IN) über einer gegebenen Schwelle ist.

8. Eine Schlüsselsteuerungsschaltung gemäß einem der Ansprüche 1 bis 7, wobei das Ausgangssteuerungssignal (OUT) ein aktiv-niedriges Signal ist, das ausgebildet ist zum Abschalten einer Einspritzvorrichtung.

9. Eine Schlüsselsteuerungsschaltung gemäß Anspruch 8, wobei diese weiter mit einem Hilfssignal (ENABLE) versehen ist, das die Einspritzvorrichtung durch direktes Umschalten des Ausgangssignals (OUT) steuert.

10. Eine Schlüsselsteuerungsschaltung gemäß Anspruch 8 oder 9, wobei das aktiv-niedrige Signal weiter ausgebildet ist zum Abschalten eines Hochdruckventils.

## Revendications

1. Circuit de commande à clé avec coupure en sécurité retardée d'un dispositif électronique, comprenant
- une entrée de commutateur à clé (IN) pour détecter l'enlèvement d'une clé ;
- une capacité de retard (CDELAY) pour créer un retard temporel avec la charge stockée ;
- un signal de commande de sortie (OUT) permettant une coupure dudit dispositif électronique après écoulement dudit retard temporel prédéfini ;
**caractérisé en ce qu'**il comprend en outre un circuit à retard constitué de composants discrets comprenant :
- une source de courant compensée en température (2) adaptée pour charger la capacité de retard ;
- une source de tension compensée en température (4) définissant un point de déclenchement auquel le circuit à retard bascule une fois que la charge stockée correspond au retard temporel prédéfini ; et
- un commutateur compensé en température (6) adapté pour faire basculer la capacité de retard depuis un état de charge vers un état de décharge et délivrer le signal de commande de sortie.

2. Circuit de commande à clé selon la revendication 1, dans lequel ladite capacité de retard (C_{DELAY}) est une capacité en céramique.

3. Circuit de commande à clé selon la revendication 1 ou 2, qui est uniquement dépendant d'un voltage d'alimentation.

4. Circuit de commande à clé selon l'une quelconque des revendications 1 à 3, qui est indépendant de toute interaction logicielle.

5. Circuit de commande à clé selon l'une quelconque des revendications 1 à 4, comprenant en outre de points de voltage de référence (V_{A}, V_{B}) à la fois pour la source de courant compensée en température et pour la source de voltage compensée en température (2, 4).

6. Circuit de commande à clé selon la revendication 5, dans lequel les points de voltage de référence (VA, VB) sont agencés pour garantir que le voltage maximum de la source de courant compensée en température (2) sera toujours plus élevé que le voltage de sortie de la source de voltage compensée en température (4).

7. Circuit de commande à clé selon l'une quelconque des revendications 1 à 6, qui comprend en outre un circuit auxiliaire (10) adapté pour décharger la capacité de retard (C_{DELAY}) si le voltage de l'entrée de commutation à clé (IN) est au-dessus d'un seuil donné.

8. Circuit de commande à clé selon l'une quelconque des revendications 1 à 7, dans lequel ledit signal de commande de sortie (OUT) est un faible signal actif adapté pour couper un dispositif injecteur.

9. Circuit de commande à clé selon la revendication 8, dans lequel il est en outre prévu un signal auxiliaire (ENABLE) qui commande le dispositif injecteur en faisant directement basculer le signal de sortie (OUT).

10. Circuit de commande à clé selon la revendication 8 ou 9, dans lequel ledit faible signal actif est en outre adapté à couper une soupape à haute pression.
